# EUROPÄISCHE PATENTSCHRIFT

(11) **EP 2 656 012 B1**
(45) Veröffentlichungstag und Bekanntmachung des Hinweises auf die Patenterteilung: **31.12.2014**
(21) Anmeldenummer: 11774010.0
(22) Anmeldetag: 10.10.2011
(51) Int. Cl.: F16H 55/06, F16H 55/17, G01D 5/14, G01B 7/30

(54) **WINKELSENSOR, ZAHNRAD FÜR WINKELSENSOR UND VERFAHREN ZUM HERSTELLEN EINES SOLCHEN ZAHNRADES**
ANGLE SENSOR, GEAR WHEEL FOR AN ANGLE SENSOR AND METHOD FOR PRODUCING SUCH A GEAR WHEEL
CAPTEUR D'ANGLE, ROUE DENTÉE POUR CAPTEUR D'ANGLE ET PROCÉDÉ DE FABRICATION D'UNE TELLE ROUE DENTÉE

(30) Priorität: 22.12.2010 DE 102010063845
(43) Veröffentlichungstag der Anmeldung: 30.10.2013
(73) Patentinhaber: Robert Bosch GmbH, 70442 Stuttgart (DE)
(72) Erfinder: BRAUN, Alexander, 75181 Pforzheim (DE); WELSCH, Wolfgang, 69121 Heidelberg (DE); WAIBLER, Matthias, 73630 Remshalden-Hebsack (DE); BURKHARDT, Klaus, 71679 Asperg (DE); KIMMERLE, Mathias, 71711 Steinheim (DE)
(86) Internationale Anmeldenummer: PCT/EP2011/067639
(87) Internationale Veröffentlichungsnummer: WO 2012/084288

(56) Entgegenhaltungen:
- EP-A2- 1 777 484
- EP-A2- 1 783 036
- WO-A1-2008/013372
- DE-A1- 19 816 696
- DE-A1- 19 835 694

## Beschreibung

### GEBIET DER ERFINDUNG

Die Erfindung betrifft einen Winkelsensor zum Ermitteln eines Drehwinkels eines drehbaren Körpers, wie er insbesondere als Lenkwinkelsensor zum Ermitteln eines Lenkwinkels einer Lenksäule in einem Kraftfahrzeug eingesetzt werden kann. Die Erfindung betrifft ferner ein Zahnrad für einen solchen Winkelsensor sowie ein Verfahren zum Herstellen eines solchen Zahnrades.

### STAND DER TECHNIK

Es sind Winkelsensoren bekannt, die dazu ausgelegt sind, einen Winkel eines drehbaren Körpers absolut, das heißt, auch bei ruhendem Körper, zu messen. Ein solcher Winkelsensor ist in der DE 195 06 938 A1 beschrieben. Dabei ist an einem drehbaren Körper, wie zum Beispiel einer Lenksäule eines Fahrzeugs, ein erstes Zahnrad vorgesehen, das zusammen mit dem drehbaren Körper um mehr als 360° drehbar ist. Mit diesem Zahnrad stehen zwei Messzahnräder in Eingriff, wobei die Anzahl der Zähne dieser Messzahnräder kleiner ist als bei dem zuvor genannten Zahnrad und sich die Anzahl der Zähne bei den beiden Messzahnrädern beispielsweise um einen Zahn unterscheidet. Aus den gemessenen Winkeln der beiden Messzahnräder kann der Winkel des ersten Zahnrads und damit des drehbaren Körpers absolut ermittelt werden.

Um den Winkel der Messzahnräder bestimmen zu können, weisen diese bei herkömmlichen Winkelsensoren sogenannte Magnetpillen auf. Diese Magnetpillen bestehen aus einem magnetisierbaren Material wie zum Beispiel NdFeB (Neodym-Eisen-Bor) bzw. einem formbaren Matrixmaterial, in das NdFeB-Partikel eingelagert sind. Eine Magnetpille wird mit dem Messzahnrad fest verbunden. Beispielsweise kann die Magnetpille in das Zahnrad eingeclipst werden. Alternativ kann zur Herstellung des gesamten Messzahnrads eine Magnetpille als Kern bereitgestellt werden, um den dann in das restliche Messzahnrad im Spritzgussverfahren herumgespritzt wird.

Die Orientierung des von der Magnetpille generierten magnetischen Feldes kann mit Hilfe eines Magnetfeldsensors, der benachbart zu einer Stirnfläche des Messzahnrades angeordnet ist, gemessen werden. Aus dieser Magnetfeldorientierung kann auf die Orientierung des jeweiligen Messzahnrades geschlossen werden und bei Kenntnis der beiden Orientierungen der beiden Messzahnräder kann letztendlich auf die Orientierung bzw. den Drehwinkel des drehbaren Körpers geschlossen werden.

### OFFENBARUNG DER ERFINDUNG

Es kann ein Bedarf an einem Winkelsensor sowie an einem Zahnrad für einen Winkelsensor und ein Verfahren zum Herstellen eines solchen Zahnrades bestehen, wobei der Winkelsensor einfach aufgebaut ist und dennoch eine präzise Ermittlung eines Drehwinkels eines drehbaren Körpers erlaubt.

Einem solchen Bedarf kann mit den Gegenständen der unabhängigen Ansprüche entsprochen werden. Vorteilhafte Ausführungsformen sind in den abhängigen Ansprüchen definiert.

Gemäß einem ersten Aspekt der vorliegenden Erfindung wird ein Zahnrad vorgeschlagen, dass als Messzahnrad für einen Winkelsensor wie z.B. einen Kfz-Lenkwinkelsensor eingesetzt werden kann. Das Zahnrad weist dabei entlang eines Umfangs eine Mehrzahl von Zähnen auf. Erfindungsgemäß besteht das Zahnrad vollständig aus einem magnetisierbaren Material, wobei in das Zahnrad eine Magnetisierung eingebracht ist, die in einem Zentralbereich des Zahnrades stärker ist als in einem Randbereich, in dem die Zähne angeordnet sind.

Gemäß einem zweiten Aspekt der vorliegenden Erfindung wird ein Winkelsensor vorgeschlagen. Der Winkelsensor weist wenigstens ein Zahnrad oder vorzugsweise wenigstens zwei Zahnräder als Messzahnräder auf. Der Winkelsensor weist ferner einen oder mehrere den Zahnrädern zugeordnete Magnetfeldsensoren auf. Ein Zahnrad wirkt dabei mit dem drehbaren Körper, dessen Drehwinkel ermittelt werden soll, derart zusammen, dass ein Drehen des drehbaren Körpers ein Drehen des Zahnrades um seine Drehachse bewirkt. Das Zahnrad ist dabei dazu ausgebildet, in einer zu der Drehachse orthogonalen Ebene ein im Wesentlichen homogenes Magnetfeld zu erzeugen, dessen Richtung von dem Magnetfeldsensor ermittelt werden kann. Erfindungsgemäß besteht das Zahnrad dabei vollständig aus einem magnetisierbaren Material.

Gemäß einem dritten Aspekt der vorliegenden Erfindung wird ein Verfahren zum Herstellen eines Zahnrades für einen Winkelsensor vorgeschlagen. Das Verfahren weist dabei die folgenden Verfahrensschritte auf: Zunächst wird das gesamte Zahnrad aus einem magnetisierbaren Material einstückig hergestellt, beispielsweise durch spritzgießen oder pressen. Anschließend wird das Zahnrad derart magnetisiert, dass in einem Zentralbereich des Zahnrades eine stärkere Magnetisierung herrscht als in einem Randbereich.

Nachfolgend werden Erkenntnisse und Ideen, auf denen Aspekte der Erfindung bzw. deren Ausführungsformen beruhen, kurz geschildert und Merkmale und Vorteile von erfindungsgemäßen Ausführungsformen beschrieben.

Es wurde erkannt, dass die Fertigung von Zahnrädern für Winkelsensoren, bei denen wie oben beschrieben eine magnetische Pille in das Zahnrad eingesetzt ist, mit einem erheblichen Arbeitsaufwand verbunden sein kann. Herkömmlich wurde zunächst eine Pille aus einem magnetisierbaren Material hergestellt, beispielsweise im Spritzgussverfahren. Anschließend wurde die Pille diametral aufmagnetisiert, so dass das von ihr erzeugte Magnetfeld zumindest in einem Zentralbereich in einer Ebene parallel zu der Oberfläche der Pille weitgehend homogen ist. Der Magnetisierungsvorgang wurde in der Regel an der fertigen spritzgegossenen Pille durchgeführt. Anschließend wurde die magnetisierte Pille entweder in einen separat hergestellten Zahnradkörper eingeclipst oder eingepresst. Alternativ wurde die Pille in einem weiteren Spritzgussverfahrensschritt mit einem Zahnradkörper umspritzt.

Um die Herstellung von Zahnrädern, von denen ein Magnetfeld ausgeht, dessen Orientierung mit Hilfe eines Magnetfeldsensors bestimmt werden kann, zu vereinfachen, wird nun vorgeschlagen, auf die separate Fertigung einer Magnetpille zu verzichten. Es wurde erkannt, dass Zahnräder anstatt mit der herkömmlichen mehrstückigen Ausgestaltung auch mit einer einstückigen Ausgestaltung, bei der das gesamte Zahnrad aus einem magnetisierbaren Material besteht, derart ausgebildet werden können, dass sie in einem Winkelsensor geeignet eingesetzt werden können. Das einstückige Ausbilden des Zahnrades aus einem magnetisierbaren Material kann einen Herstellungsprozess erheblich vereinfachen.

Um mit Hilfe des einstückig ausgebildeten Zahnrades ein Magnetfeld zu erzeugen, dessen Orientierung mit ausreichender Genauigkeit von einem Magnetfeldsensor bestimmt werden kann, sollte das Zahnrad in einem Zentralbereich stärker magnetisiert sein als in einem Randbereich. Unter dem Zentralbereich kann hierbei ein Bereich in der Nähe der Drehachse des Zahnrades, beispielsweise innerhalb des Fußkreisdurchmessers, verstanden werden. Benachbart zu diesem Zentralbereich kann in dem Winkelsensor dann der Magnetfeldsensor angeordnet sein. Dadurch, dass das Zahnrad nicht wie bei den herkömmlichen Magnetpillen gleichmäßig mit einer diametralen Magnetisierung durchmagnetisiert ist, sondern stattdessen derart magnetisiert ist, dass in einem Zentralbereich eine höhere Magnetisierung herrscht als in einem Randbereich, kann vermieden werden, dass die Magnetisierung der im Randbereich angeordneten Zähne des Zahnrads einen störenden Einfluss beispielsweise auf die Homogenität des von dem Zahnrad erzeugten Magnetfeldes ausüben.

Um die Orientierung des Zahnrades mit Hilfe des Magnetfeldsensors präziser ermitteln zu können, wird angestrebt, dass das Zahnrad in dem Zentralbereich in einer Ebene orthogonal zu der Drehachse des Zahnrades ein im Wesentlichen homogenes Magnetfeld erzeugt. Unter "homogen" wird dabei verstanden, dass die Magnetfeldlinien parallel verlaufen. "Im Wesentlichen" kann hierbei derart verstanden werden, dass das erzeugte Magnetfeld ausreichend homogen ist, um die Orientierung des Magnetfeldes mit einem Magnetfeldsensor mit einer für eine gegebene Applikation gewünschten Genauigkeit durchführen zu können. Beispielsweise sollten Abweichungen von einer Parallelität der Magnetfeldlinien geringer als 5°, vorzugsweise geringer als 2° sein.

Um dies zu erreichen, kann in das Zahnrad eine stirnseitige Magnetisierung eingebracht sein. Ein derart magnetisiertes Zahnrad wird auch als oberflächenmagnetisiert bezeichnet. Wie weiter unten noch im Detail beschrieben werden wird, wird zur Erreichung einer solchen stirnseitigen Magnetisierung nicht das gesamte Zahnrad wie bei einer herkömmlichen diametralen Magnetisierung einem homogenen Magnetfeld ausgesetzt. Stattdessen wird das Zahnrad während der Magnetisierung des magnetisierbaren Materials einem inhomogenen Magnetfeld ausgesetzt, das hauptsächlich von einer Stirnseite des Zahnrads in das Zahnrad eintritt und aufgrund seiner Inhomogenität bewirken kann, dass das Zahnrad in dem Zentralbereich stärker magnetisiert wird als in dem Randbereich. Die stirnseitige Magnetisierung kann als 2-polige Magnetisierung ausgeprägt sein. Alternativ können auch 4-polige, 6-polige oder allgemein 2n-polige (n= 1, 2, 3, ...) Magnetisierungen verwendet werden.

Das Zahnrad kann beispielsweise mit einem magnetisierbaren Material gebildet werden, bei dem magnetisierbare Partikel in ein formbares Matrixmaterial eingebettet sind. Das Matrixmaterial kann dabei beispielsweise ein im Spritzgussverfahren oder durch Pressen verarbeitbares Material sein. Dadurch lässt sich eine einfache Herstellbarkeit des Zahnrades in nur einem Formgebungsschritt erreichen.

Als Material für die magnetisierbaren Partikel hat sich hierbei Hartferrit als vorteilhaft herausgestellt. Es kann kostengünstig bereitgestellt und in vorteilhafter Weise magnetisiert werden.

Zur Herstellung des Zahnrades kann dieses spritzgegossen oder gepresst werden, wobei es vorteilhaft sein kann, das Zahnrad direkt in der zum Herstellen verwendeten Form zu magnetisieren. Da das Zahnrad mit nur einem Formgebungsprozess einstückig gebildet werden kann, kann somit der gesamte Herstellungsprozess einschließlich der Magnetisierung in einer einzigen Vorrichtung durchgeführt werden. Hierbei kann zum Beispiel ausgenutzt werden, dass eine Magnetisierung während des Aushärtens eines Spritzgussmaterials zu einer stärkeren Magnetfelderzeugung durch das Zahnrad führen kann als bei einer nachträglichen Magnetisierung des Zahnrads in einem fertig ausgehärteten Zustand.

Die Magnetisierung kann dabei mit Hilfe von Permanentmagneten und/oder Elektromagneten durchgeführt werden, die benachbart zu einer Stirnfläche des Zahnrads angeordnet sind. Durch eine solche Anordnung von Magneten kann eine gewünschte stirnseitige Magnetisierung des Zahnrades in einfacher Weise erzeugt werden. Insbesondere bei der Verwendung von Ferrit in dem magnetisierbaren Material hat sich gezeigt, dass sich dieses auf Grund seiner einfachen Magnetisierbarkeit auch durch kostengünstige Permanentmagnete ausreichend magnetisieren lässt und auf teure Elektromagneten verzichtet werden kann.

Es wird angemerkt, dass Gedanken zu der Erfindung hierin im Zusammenhang sowohl mit einem Winkelsensor bzw. einem der darin verwendbaren Zahnräder als auch mit einem Verfahren zum Herstellen eines Zahnrades beschrieben sind. Einem Fachmann ist hierbei klar, dass die einzelnen beschriebenen Merkmale auf verschiedene Weise miteinander kombiniert werden können, um so auch zu anderen Ausgestaltungen der Erfindung zu führen.

### KURZE BESCHREIBUNG DER ZEICHNUNGEN

Nicht einschränkend auszulegende Ausführungsformen der Erfindung werden nachfolgend mit Bezug auf die beigefügten Figuren beschrieben. Die Figuren sind lediglich schematisch und nicht maßstabsgetreu.
Fig. 1 zeigt eine Draufsicht auf einen erfindungsgemäßen Winkelsensor.
Fig. 2 zeigt eine Querschnittsansicht auf einen erfindungsgemäßen Winkelsensor.
Fig. 3 zeigt eine Querschnittsansicht eines erfindungsgemäßen Zahnrades zur Veranschaulichung am Beispiel einer zweipoligen stirnseitigen Magnetisierung.
Fig. 4 zeigt eine Draufsicht auf ein erfindungsgemäßes Zahnrad zur Veranschaulichung am Beispiel einer zweipoligen stirnseitigen Magnetisierung.
Fig. 5 zeigt ein Zahnrad zur Veranschaulichung einer diametralen Magnetisierung.
Fig. 6 zeigt eine Vorrichtung, die zum erfindungsgemäßen Herstellen eines Zahnrads eingesetzt werden kann.

### AUSFÜHRUNGSFORMEN DER ERFINDUNG

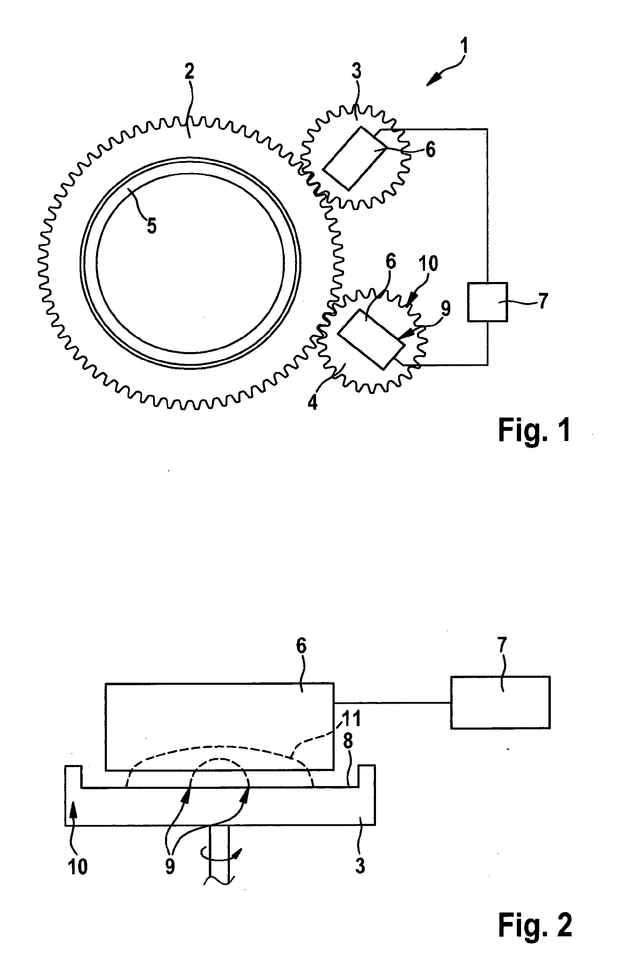

Fig. 1 zeigt in Draufsicht eine schematische Darstellung eines erfindungsgemäßen Winkelsensors 1. An einem drehbaren Körper 5, wie zum Beispiel der Achse einer Lenksäule in einem Fahrzeug, ist ein großes Zahnrad 2 fest angebracht. Zwei kleinere Zahnräder 3, 4 stehen mit dem großen Zahnrad 2 in Eingriff, so dass sie sich bei einer Bewegung des großen Zahnrads 2 mitdrehen. Die Anzahl von Zähnen unterscheidet sich bei den beiden kleinen Zahnrädern 3 und 4 um mindestens einen Zahn. Die kleinen Zahnräder 3, 4 sind vollständig aus einem magnetisierbaren Material gebildet. Die Zahnräder sind dabei in einer Weise magnetisiert, dass ein Magnetfeld, das parallel zu einer Stirnfläche der Zahnräder 3, 4 verläuft, weitgehend homogen ist.

Wie sowohl in Fig. 1 als auch in der Querschnittsansicht aus Fig. 2 schematisch dargestellt, ist über der Stirnfläche 8 der Zahnräder 3, 4 jeweils ein Magnetfeldsensor 6 angeordnet. Dieser Magnetfeldsensor 6 ist dazu geeignet, die Orientierung des von dem magnetisierten Zahnrad 3 erzeugten Magnetfeldes 11 zu detektieren. Zu diesem Zweck können beispielsweise aus XMR-Sensoren, die unter Einfluss eines magnetischen Flusses direkt ihren Widerstand ändern und daher "X-Magneto Resistive" heißen, verwendet werden. Beispielsweise können GMR-Sensoren, die den "Giant Magneto Resistive"-Effekt nutzen, oder AMR-Sensoren, die den "Anisotropic Magnetic Resistance"-Effekt nutzen, verwendet werden.

Die auf diese Weise erhaltene Information über die Orientierung der Zahnräder 3, 4 kann an eine Auswerteeinheit 7 weitergeleitet werden. Dort kann basierend auf den gemessenen Orientierungen sowie in Kenntnis der unterschiedlichen Anzahl von Zähnen der beiden Zahnräder 3, 4 ein Drehwinkel des damit verbundenen großen Zahnrads 2 absolut ermittelt werden.

Wie in Fig. 2 grob dargestellt, wird das von dem Zahnrad 3 erzeugte Magnetfeld 11 von dem Magnetfelddetektor 6 lediglich in einem Zentralbereich 9 des Zahnrades erfasst. Außerhalb des Zentralbereichs 9, und insbesondere in einem Randbereich 10, in dem die Zähne angeordnet sind, wird das erzeugte Magnetfeld 11 nicht gemessen. Bei herkömmlichen Messzahnrädern für Winkelsensoren wurde daher lediglich im Zentrum des Zahnrades 3 eine magnetisierte Pille angeordnet und fest mit dem Zahnrad verbunden.

Bei den hierin vorgeschlagenen Zahnrädern 3, 4, die vollständig aus magnetisierbarem Material bestehen, wurde beobachtet, dass eine starke Magnetisierung innerhalb des Randbereichs 10 einen negativen Einfluss auf die Messgenauigkeit, mit der der Magnetfeldsensor 6 die Orientierung des Zahnrades 3, 4 bestimmen kann, haben kann. Um solche negativen Einflüsse zu minimieren, wird dabei bei dem vollständig aus magnetisierbarem Material bestehenden Zahnrad 3, 4 eine Magnetisierung eingebracht, die im Zentralbereich 9 wesentlich stärker ist als in dem Randbereich 10. Beispielsweise kann die magnetische Feldstärke im Zentralbereich eine maximale Feldstärke aufweisen, die um den Faktor 5 bis 10 stärker sein kann als eine maximale Feldstärke in dem Randbereich 10.

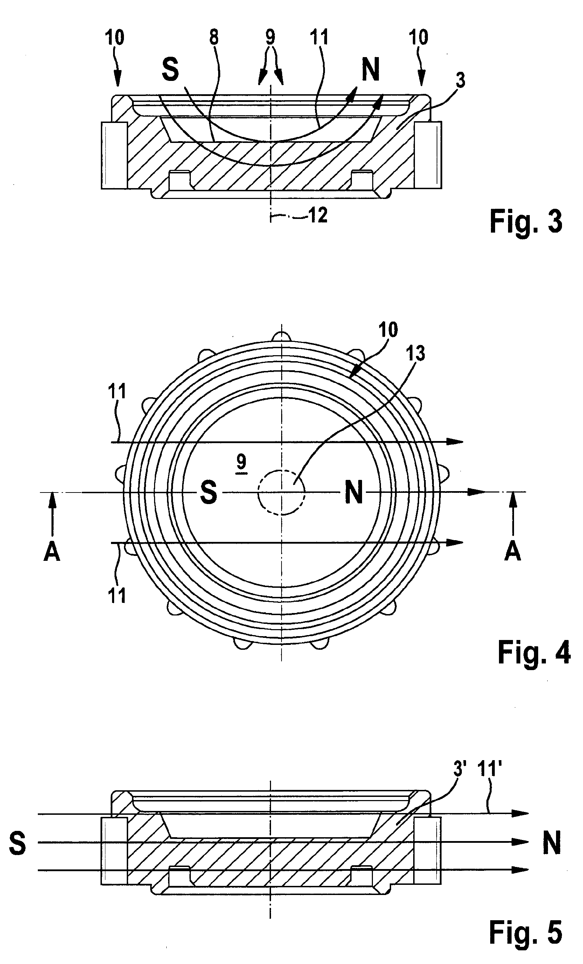

Um eine derartige, auf den Zentralbereich 9 konzentrierte Magnetfeldverteilung zu erreichen, hat es sich als vorteilhaft herausgestellt, das Zahnrad 3, 4 in einer Weise zu magnetisieren, die als mehrpolig stirnseitig magnetisiert oder auch als mehrpolig obertlächenmagnetisiert bezeichnet werden kann. Die Fig. 3 und 4 zeigen schematisch eine Schnittansicht und eine Draufsicht auf das Zahnrad 3 bei einer solchen Magnetisierungsart. Der in Fig. 3 gezeigte Querschnitt wurde dabei entlang der in Fig. 4 gezeigten Linie A-A aufgenommen. Fig. 5 zeigt demgegenüber eine herkömmliche, diametrale Aufmagnetisierungsart. Bei der beispielhaft in den Fig. 3 und 4 gezeigten zweipolig stirnseitigen Magnetisierung tritt ein Magnetfeld, das durch die Feldlinien 11 veranschaulicht wird, von einer Stirnseite 8 des Zahnrads 3 in das Volumen des Stirnrades 3 ein und kann bei entsprechend ausreichender Stärke des Magnetfeldes das dort vorhandene magnetisierbare Material aufmagnetisieren. Das Magnetfeld 11 verläuft dabei von einem Südpol S zu einem Nordpol N eines an die Stirnfläche des Zahnrades 3 angrenzenden Permanent- oder Elektromagneten (nicht dargestellt). In einer Ebene quer zur Ebene des Zahnrades 3, wie in Fig. 3 dargestellt, ist dabei das Magnetfeld 11 stark inhomogen und magnetisiert das Zahnrad 3 hauptsächlich in dessen Zentralbereich 9 auf. In einer Ebene parallel zur Stirnfläche 8 des Zahnrads 3, das heißt, in einer Ebene orthogonal zu der Drehachse 12 des Zahnrads 3, wie in Fig. 4 dargestellt, ist das Magnetfeld 11 hingegen sehr homogen, das heißt, die Feldlinien (Vektorpfeile) sind weitgehend parallel. Während das gesamte Zahnrad 3 beispielsweise mehrere Zentimeter groß sein kann, wird das Magnetfeld 11 von dem Magnetfeldsensor 6 lediglich in einem kleinen Messbereich 13 im Innern des Zentralbereichs 9 detektiert. Innerhalb dieses Messbereichs 13 ist das erzeugte Magnetfeld 11 sehr homogen und eignet sich daher für eine präzise Bestimmung der Orientierung des Zahnrads 3.

Lediglich zu Vergleichszwecken ist in Fig. 5 eine herkömmliche diametrale Aufmagnetisierung dargestellt. Während des Magnetisierungsvorgangs dringt dabei ein homogenes Magnetfeld 11' durch das gesamte Zahnrad 3' hindurch. Dabei werden alle Bereiche des Zahnrads 3 im Wesentlichen gleich stark aufmagnetisiert. Es wurde herausgefunden, dass mit einer solchen diametralen Aufmagnetisierung eine Bestimmung der Orientierung des Zahnrads 3' anhand des von ihm erzeugten Magnetfeldes 11' nicht bzw. nur mit mangelnder Präzision möglich ist. Es wurde zum Beispiel beobachtet, dass bei ansonsten ähnlichen Magnetisierungsparametern mit einem diametral magnetisierten Zahnrad am Ort des Magnetfeldsensors lediglich eine magnetische Flussdichte, die für eine zuverlässige Winkelbestimmung nicht ausreicht, erreicht werden konnte, während mit einer Oberflächenmagnetisierung bzw. stirnseitigen Magnetisierung eine Flussdichte erreicht werden konnte, die für eine zuverlässige Winkelbestimmung ausreicht.

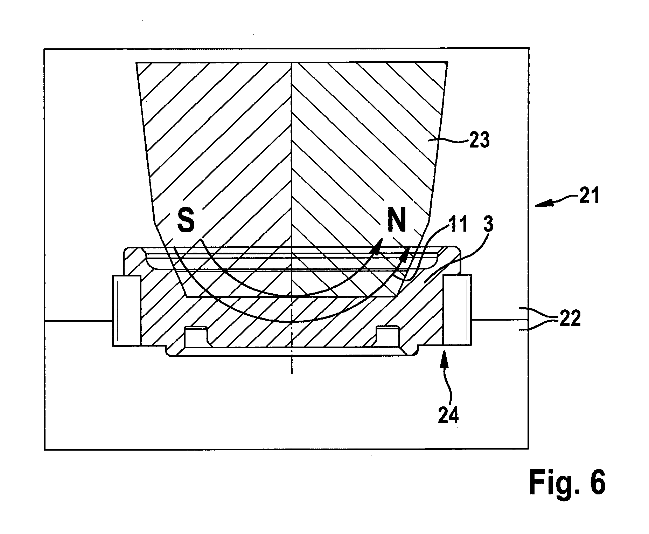

Fig. 6 zeigt einen Querschnitt einer Vorrichtung 21, die zum erfindungsgemäßen Herstellen eines Zahnrades 3 verwendet werden kann. Sehr schematisch dargestellt weist die Vorrichtung 21 eine zweiteilige Form 22 auf, die eine Ausnehmung 24 aufweist, in der das Zahnrad 3 in einem Spritzgussverfahren hergestellt werden kann. Hierzu wird ein spritzgussfähiges, magnetisierbares Material in einem flüssigen oder viskosen Zustand in die Ausnehmung 24 eingebracht, um anschließend dort auszuhärten und schließlich das Zahnrad 3 zu bilden. Alternativ kann das Zahnrad 3 auch durch Pressen geformt werden.

Als magnetisierbares Material kann hierbei ein Gemisch aus Magnetpulver und Kunststoffgranulat dienen, wie es üblicherweise bei der Herstellung von kunststoffgebundenen Magneten verwendet wird. Das Magnetpulver, dass kleine magnetisierbare Partikel enthält, kann nach einem Verflüssigen und anschließenden Wiedererstarren des Kunststoffgranulates gleichmäßig innerhalb der Kunststoffmatrix verteilt sein. Für das Magnetpulver kann insbesondere ein Pulver aus Hartferrit verwendet werden, zum Beispiel Hartferrit 16/21 p nach DIN IEC 60404-8-1. Dieses Magnetpulver ist vergleichsweise kostengünstig. Alternativ kann auch Magnetpulver aus NdFeB verwendet werden, wie es bei der Herstellung herkömmlicher Magnetpillen eingesetzt wird. Dieses Magnetpulver kann zwar prinzipiell stärker magnetisiert werden, ist jedoch auch erheblich teurer und schwieriger zu magnetisieren als Hartferrit.

Um das Zahnrad 3 bereits während des Spritzgießvorgangs aufmagnetisieren zu können, ist in der Vorrichtung 21 zusätzlich ein Permanentmagnet 23 integriert. Der Permanentmagnet 23 erzeugt ein Magnetfeld 11, wie es zuvor mit Bezug auf die Fig. 3 und 4 erörtert wurde. Hierzu grenzt der Permanentmagnet 23 an die Ausnehmung, in der das Zahnrad 3 gebildet wird, an. Auf diese Weise kann das Magnetfeld 11 bereits auf das zur Bildung des Zahnrads 3 verwendete magnetisierbare Material einwirken, solange dieses noch nicht ausgehärtet ist. Das Magnetfeld 11 kann während des gesamten Aushärtungsvorgangs, der bei üblichen Spritzgussverfahren beispielsweise 10-20 s dauern kann, wirken. Es wurde beobachtet, dass auf diese Weise die in dem Zahnrad 3 erzeugte Magnetisierung stärker und stabiler sein kann als bei einem nachträglichen Aufmagnetisieren des bereits vollständig ausgehärteten Zahnrades. Aufgrund dieser besseren Magnetisierungswirkung kann daher für das Zahnrad 3 auch Hartferrit-haltiges Material verwendet werden, obwohl Hartferrit sich generell nur weniger stark magnetisieren lässt als NdFeB. Zusätzlich wurde auch beobachtet, dass Hartferrit auch schon bei geringeren Magnetfeldstärken ummagnetisiert werden kann als NdFeB, so dass für den Magnetisierungsvorgang auch Permanentmagnete eingesetzt werden können, die generell im Vergleich zu Elektromagneten schwächere Magnetfeldstärken bereitstellen können.

## Patentansprüche

1. Zahnrad (3,4) für einen Winkelsensor (1),
wobei das Zahnrad eine Mehrzahl von Zähnen aufweist, die entlang des Umfangs des Zahnrades angeordnet sind;
**dadurch gekennzeichnet,**
**dass** das Zahnrad vollständig aus einem magnetisierbaren Material besteht, und dass in das Zahnrad eine Magnetisierung (11) eingebracht ist, die in einem Zentralbereich (9) des Zahnrades stärker ist als in einem Randbereich (10), in dem die Zähne angeordnet sind.

2. Zahnrad nach Anspruch 1, wobei in das Zahnrad eine stirnseitige Magnetisierung eingebracht ist.

3. Zahnrad nach Anspruch 1 oder 2, wobei iri das Zahnrad eine Magnetisierung eingebracht ist, die in dem Zentralbereich des Zahnrades in einer Ebene orthogonal zu einer Drehachse des Zahnrades im Wesentlichen homogen ist.

4. Zahnrad nach einem der Ansprüche 1 bis 3, wobei das magnetisierbare Material magnetisierbare Partikel, die in ein formbares Matrixmaterial eingebettet sind, aufweist.

5. Zahnrad nach einem der Ansprüche 1 bis 4, wobei das magnetisierbare Material Hartferrit aufweist.

6. Winkelsensor (1) zur Ermittlung eines Drehwinkels eines drehbaren Körpers (2), wobei der Winkelsensor aufweist:
wenigstens ein Zahnrad (3, 4); und
einen Magnetfeldsensor (6);
wobei das Zahnrad mit dem drehbaren Körper derart zusammenwirkt, dass ein Drehen des drehbaren Körpers ein Drehen des Zahnrades um eine Drehachse (12) bewirkt;
wobei das Zahnrades dazu ausgebildet ist, in einer zu der Drehachse des Zahnrades orthogonalen Ebene ein im Wesentlichen homogenes Magnetfeld zu erzeugen; und
wobei der Magnetfeldsensor dazu ausgebildet und angeordnet ist, eine Orientierung des von dem Zahnrad erzeugten Magnetfeldes zu bestimmen;
**dadurch gekennzeichnet, dass**
das Zahnrad vollständig aus einem magnetisierbaren Material besteht,
wobei das Zahnrad als Zahnrad gemäß einem der Ansprüche 1 bis 5 ausgebildet ist.

7. Verfahren zum Herstellen eines Zahnrades (3, 4) für einen Winkelsensor (1), wobei das Verfahren aufweist:
Bilden des gesamten Zahnrads aus einem magnetisierbaren Material; Magnetisieren des Zahnrades derart, dass in das Zahnrad eine Magnetisierung eingebracht ist, die in einem Zentralbereich (9) des Zahnrades stärker ist als in einem Randbereich (10), in dem Zähne des Zahnrades angeordnet sind.

8. Verfahren nach Anspruch 7, wobei das Magnetisieren des Zahnrads durchgeführt wird, während das Zahnrad innerhalb einer für das Bilden des Zahnrades verwendeten Form (22) angeordnet ist.

9. Verfahren nach Anspruch 7 oder 8, wobei das Magnetisieren mit Hilfe eines Permanentmagneten (23) und/oder Elektromagneten durchgeführt wird, der benachbart zu einer Stirnfläche (8) des Zahnrades angeordnet ist.

## Claims

1. Toothed wheel (3,4) for an angle sensor (1),
wherein the toothed wheel comprises a plurality of teeth that are arranged along the periphery of the toothed wheel;
**characterized in that**
the toothed wheel is embodied completely from a magnetizable material and **in that** a level of magnetization (11) is introduced into the toothed wheel, which level of magnetization is greater in a central region (9) of the toothed wheel than in an edge region (10) in which the teeth are arranged.

2. Toothed wheel according to Claim 1, wherein an end face of the toothed wheel is magnetized.

3. Toothed wheel according to Claim 1 or 2, wherein a magnetization that is essentially homogeneous in the central region of the toothed wheel in a plane that is orthogonal with respect to an axis of rotation of the toothed wheel is introduced into the toothed wheel.

4. Toothed wheel according to any one of Claims 1 to 3, wherein the magnetizable material comprises magnetizable particles that are embedded in a moldable matrix material.

5. Toothed wheel according to any one of Claims 1 to 4, wherein the magnetizable material comprises hard ferrite.

6. Angle sensor (1) for ascertaining an angle of rotation of a rotatable body (2), wherein the angle sensor comprises:
at least one toothed wheel (3,4); and
a magnetic field sensor (6);
wherein the toothed wheel cooperates with the rotatable body in such a manner that as the rotatable body rotates it causes the toothed wheel to rotate about an axis of rotation (12);
wherein the toothed wheel is embodied for the purpose of generating an essentially homogeneous magnetic field in a plane that is orthogonal with respect to the axis of rotation of the toothed wheel; and
wherein the magnetic field sensor is embodied and arranged for the purpose of ascertaining an orientation of the magnetic field that is generated by the toothed wheel;
**characterized in that**
the toothed wheel is embodied completely from a magnetizable material,
wherein the toothed wheel is embodied as the toothed wheel in accordance with any one of Claims 1 to 5.

7. Method for producing a toothed wheel (3, 4) for an angle sensor (1),
wherein the method comprises:
embodying the entire toothed wheel from a magnetizable material;
magnetizing the toothed wheel in such a manner that the toothed wheel is magnetized to a greater extent in a central region (9) of the toothed wheel than in an edge region (10) in which the teeth of the toothed wheel are arranged.

8. Method according to Claim 7, wherein the toothed wheel is magnetized while the toothed wheel is arranged inside a mold (22) that is used to form the toothed wheel.

9. Method according to Claim 7 or 8, wherein the magnetization process is performed with the aid of a permanent magnet (23) and/or an electromagnet that is arranged adjacent to an end face (8) of the toothed wheel.

## Revendications

1. Roue dentée (3, 4) pour un capteur d'angle (1),
la roue dentée présentant une pluralité de dents qui sont disposées le long de la périphérie de la roue dentée ;
**caractérisée en ce que**
la roue dentée se compose en totalité d'un matériau magnétisable,
et **en ce qu'**une magnétisation (11) est introduite dans la roue dentée, laquelle est plus importante dans une région centrale (9) de la roue dentée que dans une région de bord (10) dans laquelle sont disposées les dents.

2. Roue dentée selon la revendication 1, dans laquelle une magnétisation frontale est introduite dans la roue dentée.

3. Roue dentée selon la revendication 1 ou 2, dans laquelle une magnétisation est introduite dans la roue dentée, laquelle est essentiellement homogène dans la région centrale de la roue dentée dans un plan perpendiculairement à un axe de rotation de la roue dentée.

4. Roue dentée selon l'une quelconque des revendications 1 à 3, dans laquelle le matériau magnétisable présente des particules magnétisables qui sont noyées dans un matériau de matrice pouvant être formé.

5. Roue dentée selon l'une quelconque des revendications 1 à 4, dans laquelle le matériau magnétisable présente de la ferrite dure.

6. Capteur d'angle (1) pour déterminer un angle de rotation d'un corps rotatif (2), le capteur d'angle présentant :
au moins une roue dentée (3, 4) ; et
un capteur de champ magnétique (6) ;
la roue dentée coopérant avec le corps rotatif de telle sorte
qu'une rotation du corps rotatif provoque une rotation de la roue dentée autour d'un axe de rotation (12) ;
la roue dentée étant réalisée de manière à produire, dans un plan perpendiculaire à l'axe de rotation de la roue dentée, un champ magnétique essentiellement homogène ; et
le capteur de champ magnétique étant réalisé et disposé de manière à déterminer une orientation du champ magnétique généré par la roue dentée ;
**caractérisé en ce que**
la roue dentée se compose en totalité d'un matériau magnétisable,
la roue dentée étant réalisée sous forme de roue dentée selon l'une quelconque des revendications 1 à 5.

7. Procédé de fabrication d'une roue dentée (3, 4) pour un capteur d'angle (1), le procédé comprenant
formation de la totalité de la roue dentée à partir d'un matériau magnétisable ;
magnétisation de la roue dentée de telle sorte qu'une magnétisation soit introduite dans la roue dentée, laquelle est plus importante dans une région centrale (9) de la roue dentée que dans une région de bord (10) dans laquelle sont disposées des dents de la roue dentée.

8. Procédé selon la revendication 7, dans lequel la magnétisation de la roue dentée est effectuée pendant que la roue dentée est disposée à l'intérieur d'un moule.(22) utilisé pour former la roue dentée.

9. Procédé selon la revendication 7 ou 8, dans lequel la magnétisation s'effectue à l'aide d'un aimant permanent (23) et/ou d'un électroaimant qui est disposé à proximité d'une surface frontale (8) de la roue dentée.
